# EUROPEAN PATENT SPECIFICATION

(11) **EP 2 122 029 B1**
(45) Date of publication and mention of the grant of the patent: **15.09.2010**
(21) Application number: 07863122.3
(22) Date of filing: 19.12.2007
(51) Int. Cl.: D04H 13/00, B32B 5/26, D04H 1/42

(54) **ABRASION RESISTANT FIRE BLOCKING FABRIC**
ABRIEBFESTER TEXTILER FEUERBLOCKIERSTOFF
TISSU PARE-FEU RÉSISTANT À L'ABRASION

(30) Priority: 22.12.2006 US 644490
(43) Date of publication of application: 25.11.2009
(73) Proprietor: E. I. Du Pont de Nemours and Company, Wilmington, DE 19898 (US)
(72) Inventor: HALL, Walter Randall, III, Richmond, Virginia 23226 (US); KNOFF, Warren Francis, Richmond, Virginia 23220 (US); KRUSZEWSKI, Reginald Thomas, Chesterfield, Virginia 23838 (US)
(74) Representative: Heinemann, Monica
(86) International application number: PCT/US2007/025959
(87) International publication number: WO 2008/079236

(56) References cited:
- EP-A- 0 622 332
- WO-A-2006/022857
- WO-A-2006/058002
- WO-A-2006/071978

## Description

### BACKGROUND OF THE INVENTION

### 1. Field of the Invention.

This invention relates to an abrasion resistant nonwoven fabric, made from a compressed web of crimped fiber and an abrasion resistant substrate, that bulks when exposed to heat or flame and that is useful as a component for fire blocking mattresses, upholstery, and the like.

### 2. Description of Related Art.

United States Patent Application Publication US 2005/0215142 to Bascom and Knoff discloses a thin reinforced nonwoven fabric for use in fire blocking comprising an open mesh scrim having crimped, heat-resistant organic fibers compressed thereon, the fibers held in a compressed state by a thermoplastic binder, wherein when the fabric is exposed to heat or flame the fabric is capable of increasing its thickness by at least three times. Because of the open nature of the open mesh scrim and the compressed fibers are essentially not intentionally entangled with the scrim. Such nonwovens have little abrasion resistance.

What is needed is a method of imparting abrasion resistance while not adversely affecting the ability of the fabric to increase in thickness upon exposure to heat or flame or the textile nature of the nonwoven fabric.

### BRIEF SUMMARY OF THE INVENTION

This invention relates to a abrasion resistant nonwoven fabric for fire blocking an article, comprising a layer of fibers comprising a mixture of crimped, heat-resistant organic fibers and thermoplastic binder fibers compressed on a spunbonded thermoplastic nonwoven sheet; the layer of fibers being held in a compressed state and to the sheet, solely by the adhesion of the thermoplastic binder fibers to the heat-resistant organic fibers and to the sheet; and wherein when the fabric is exposed to heat or flame, the fabric increases in thickness by at least one and one half times.

### DETAILED DESCRIPTION OF THE INVENTION

This invention relates to an abrasion resistant nonwoven fabric for fire blocking an article that when exposed to heat or flame increases its thickness by at least one and one half times (at least 1.5X). The fabric comprises a spunbonded thermoplastic nonwoven sheet having crimped, heat-resistant organic fibers compressed thereon and held in a compressed state solely by thermoplastic binder fibers. When subjected to high heat or flame, the binder fibers in the structure soften, releasing the restrained crimped fibers and allowing the thickness of the fabric to increase dramatically. This increase creates pockets of air in the fabric, which is believed to increase the fabric's thermal performance.

The fabric is capable of increasing its thickness in response to high heat or flame because the crimped heat-resistant organic fibers are compressed but not appreciably entangled in the fabric, while previously developed nonwoven fabrics have concentrated on ensuring good entanglement of the fibers with the substrate and/or with the other fibers in the nonwoven fabric. Typically, this good entanglement is done by the imparting energy into lofty webs of fibers and/or the substrate that form(s) the nonwoven fabric to entangle the fibers and densify the fabric. When this is done, the fibers of the nonwoven fabric are so entangled they are not free to move when subjected to heat and flame.

The nonwoven fabrics of this invention have only enough entanglement of the fibers to manufacture the fabric; that is, the fibers are only entangled with each other to the extent needed to form a lightweight web that can be overlaid or combined with the spunbonded sheet. No additional energy is imparted to the nonwoven fabric to either entangle the fibers with each other or with the spunbonded sheet. The lightweight web is then laminated to the spunbonded sheet by heating and compressing the combination and then cooling the combination to set the structure while the crimped fibers are compressed and restrained. By compressing a lofty sheet in this manner, when the nonwoven fabric is exposed to high heat the binder fibers soften and the crimped heat-resistant fibers in the nonwoven fabric are free to return to a formally lofty state similar to the one they had prior to compression.

The thickness of the abrasion resistant nonwoven fabric increases by at least one and one half times (at least 1.5X) when exposed to high heat or flame. Generally, as the temperature is increased, the rate of bulking is increased and the amount of bulking increases also, and thickness increases of greater than 5 times the compressed thickness have been seen. It is believed that temperatures as low as 110°C are needed to initiate the bulking effect, and it is believed that starting at temperatures of about 225°C the bulking action proceeds immediately. The effective temperature that the fabric begins to bulk, or the bulking initiation temperature, is dependent on the melting point of the binder fibers; in many embodiments the binder fibers will have a melting point of about 110°C to up to about 200°C. The maximum amount of fabric bulking is achieved when the fabric is subjected directly to flame, wherein in some embodiments the fabric thickness preferably increases at least 3 times its original thickness.

The compressed abrasion resistant nonwoven fabrics of this invention preferably have an overall thickness of 0.025 to 0.12 centimeters (0.010 to 0.050 inches). Such fabrics also preferably have a basis weight in the range of 20 to 170 g/m² (0.6 to 5.0 oz/yd²), with the spunbonded sheet component preferably making up 50 to 85 g/m² (1.5 to 2.5 oz/yd²) and the fibrous web component preferably ranging from 1.7 to 102 g/m² (0.5 to 3.0 oz/yd²).

The abrasion resistant nonwoven fabric of this invention comprises crimped heat-resistant organic fibers. Such crimped fibers are preferably staple fibers that have cut lengths in the range of 0.4 to 2.5 inches (1 to 6.3 cm) preferably 0.75 to 2 inches (1.9 to 5.1 cm) and preferably have 2 to 5 crimps per centimeter (5 to 12 crimps per inch). By "heat resistant fiber" it is meant that the fiber preferably retains 90 percent of its fiber weight when heated in air to 500°C at a rate of 20 degrees C per minute. Such fiber is normally flame resistant, meaning the fiber or a fabric made from the fiber has a Limiting Oxygen Index (LOI) such that the fiber or fabric will not support a flame in air, the preferred LOI range being about 26 and higher. The preferred fibers do not excessively shrink when exposed to a flame, that is, the length of the fiber will not significantly shorten when exposed to flame. Fabrics containing an organic fiber that retains 90 percent of its fiber weight when heated in air to 500°C at a rate of 20 degrees C per minute tend to have limited amount of cracks and openings when burned by an impinging flame, which is important to the fabric's performance as a fire blocker.

Heat resistant and staple fibers useful in the abrasion resistant nonwoven fire-blocking fabric of this invention include fiber made from para-aramid, polyoxadiazole, polybenzazole, polybenzimidazole, and polyimide polymer. The preferred heat resistant fiber is made from aramid polymer, especially para-aramid polymer.

As used herein, "aramid" is meant a polyamide wherein at least 85% of the amide (-CONH-) linkages are attached directly to two aromatic rings. "Para-aramid" means the two rings or radicals are para oriented with respect to each other along the molecular chain. Additives can be used with the aramid. In fact, it has been found that up to as much as 10 percent, by weight, of other polymeric material can be blended with the aramid or that copolymers can be used having as much as 10 percent of other diamine substituted for the diamine of the aramid or as much as 10 percent of other diacid chloride substituted for the diacid chloride of the aramid. In the practice of this invention, the preferred para-aramid is poly(paraphenylene terephthalamide). Methods for making para-aramid fibers useful in this invention are generally disclosed in, for example, U.S. Patent Nos. 3,869,430; 3,869,429; and 3,767,756. Such aromatic polyamide organic fibers and various forms of these fibers are available from DuPont Company, Wilmington, Delaware under the trademark Kevlar® fibers.

Commercially available polybenzazole fibers useful in this invention include Zylon® PBO-AS (Poly(p-phenylene-2,6-benzobisoxazole) fiber, Pylon® PBO-HM (Poly(p-phenylene-2,6-benzobisoxazole)) fiber, available from Toyobo, Japan. Commercially available polybenzimidazole fibers useful in this invention include PBI® fiber available from Celanese Acetate LLC. Commercially available polyimide fibers useful in this invention include P-84® fiber available from LaPlace Chemical.

The heat resistant fibers can be blended with other fibers, however it is preferred the other fibers not compromise the fabric's ability to function as a flame blocker. In some preferred embodiments, the heat resistant fibers can be blended with a cellulose fiber that retains at least 10 percent of its fiber weight when heated in air to 700°C at a rate of 20 degrees C per minute. These fibers are said to be char forming. In some embodiments the regenerated cellulose fibers have 10 percent or more inorganic compounds incorporated into the fibers. Such fibers, and methods for making such fibers, are generally disclosed in United States Patent No. 3,565,749 and British Patent No. 1,064,271. A preferred charforming regenerated cellulose fiber for this invention is a viscose fiber containing hydrated silicon dioxide in the form of a polysilicic acid with aluminum silicate sites. Such fibers and methods for making such fibers are generally disclosed in United States Patent No. 5,417,752 and PCT Publication No. WO9217629. Viscose fiber containing silicic acid and having approximately 31 (+/- 3) percent inorganic material is sold under the trademark Visil® by Sateri Oy Company of Finland. Such fibers can be blended with the crimped heat resistant fibers in amounts up to about 75 weight percent, based on the amount of heat resistant fibers and blend fibers, and the fabric will still bulk with exposed to high heat and/or flame.

In some other embodiments, up to 50 percent modacrylic fibers can be blended with the heat resistant fiber. Modacrylic fiber is useful because this fiber releases flame-suppressing halogen-containing gases when burned. By modacrylic fiber it is meant acrylic synthetic fiber made from a polymer comprising acrylonitrile. Preferably the polymer is a copolymer comprising 30 to 70 weight percent of an acrylonitrile and 70 to 30 weight percent of a halogen-containing vinyl monomer. The halogen-containing vinyl monomer is at least one monomer selected, for example, from vinyl chloride, vinylidene chloride, vinyl bromide, vinylidene bromide, etc. Examples of copolymerizable vinyl monomers are acrylic acid, methacrylic acid, salts or esters of such acids, acrylamide, methylacrylamide, vinyl acetate, etc.

The preferred modacrylic fibers used in this invention are copolymers of acrylonitrile combined with vinylidene chloride, the copolymer having in addition an antimony oxide or antimony oxides for improved fire retardancy. Such useful modacrylic fibers include, but are not limited to, fibers disclosed in United States Patent No. 3,193,602 having 2 weight percent antimony trioxide, fibers disclosed in United States Patent No. 3, 748,302 made with various antimony oxides that are present in an amount of at least 2 weight percent and preferably not greater than 8 weight percent, and fibers disclosed in United States Patent Nos. 5,208,105 & 5,506,042 having 8 to 40 weight percent of an antimony compound. The preferred modacrylic fiber is commercially available Protex C from Kaneka Corporation, Japan, which is said to contain 10 to 15 weight antimony oxides, although fibers having less antimony oxide, in the range of 6 weight percent or less, can also be used.

The crimped heat resistant organic fibers are held in place with up to 30 parts by weight binder fibers activated by the application of heat. Preferably the binder fibers are present in an amount of up to 20 percent of the total weight of abrasion resistant nonwoven fabric. Binder fibers are typically made from a thermoplastic material that flows at a temperature that is lower (i.e., has a softening point lower) than the softening point of any of the other staple fibers in the fiber blend. In some embodiments sheath/ core bicomponent fibers are preferred as binder fibers, especially bicomponent binder fibers having a core of polyester homopolymer and a sheath of copolyester that is a binder material, such as are commonly available from Unitika Co., Japan (e.g., sold under the trademark MELTY®). Useful types of binder fibers can include those made from polypropylene, polyethylene, or polyester polymers or copolymers, the fibers containing only that polymer or copolymer, or as a bicomponent fiber in side-by-side or sheath/core configuration. Especially useful are binder fibers from a polymer that has a melting point lower than the melting point of any fibers in the spunbonded sheet. Likewise if sheath/core binder fibers are used, then they have a sheath polymer that has a melting point lower than the melting point of any fibers in the spunbonded sheet.

In some embodiments, the layer of fibers comprises the mixture of crimped heat-resistant organic fibers present in an amount of about 20 to 50 percent by weight and thermoplastic binder fibers present in an amount of about 10 to 30 percent by weight, based on the total weight of the layer of fibers. In some embodiments, other fibers can be present in the layer of fibers in an amount of 30 to 60 percent by weight, based on the total weight of the layer of fibers. In one preferred embodiment, the layer of fibers comprises crimped heat-resistant organic fibers in an amount of about 20 to 40 percent by weight and thermoplastic binder fibers in an amount of about 20 to 30 percent by weight, with the remaining fibers being char forming fibers. In some especially preferred embodiments the char forming fibers are present in the layer of fibers an amount of about 45 to 55 weight percent.

The abrasion resistant nonwoven fabric of this invention also contains a spunbonded thermoplastic nonwoven sheet. In some embodiments, the sheets preferably have a basis weight of 3.4 to 102 g/m² (0.1 to 3 oz/yd²). The most preferred spunbonded thermoplastic sheets have a basis weight of 50 to 85 g/m² (1.5 to 2.5 oz/yd²).

The terms "nonwoven fabric", "nonwoven sheet", "nonwoven layer", and "nonwoven web" as used herein refer to a structure of individual strands (e.g. fibers, filaments, or threads) that are positioned in a random manner to form a planar material generally without an identifiable pattern, as opposed to a knitted or woven fabric. The term "nonwoven fabric" can also include a composite sheet comprising more than one nonwoven web. The term "spunbonded sheet" or "spunbonded thermoplastic sheet" as used herein refers to a thin nonwoven sheet made by melt-spinning or extruding molten thermoplastic polymer fibers from a plurality of fine, usually circular, capillaries, generally from a plurality of spinnerets; and than collecting the fibers on a moving belt or apron in sheet form, and consolidating the nonwoven sheet as necessary for strength. In some preferred embodiments the spunbonded sheet contains predominantly continuous filaments; in some embodiments these filaments have linear density of about 2 to 5 denier per filament (2.2 to 5.5 dtex per filament). Processes for making such spunbonded scrims are known in the art, with United States Patent Nos. 3,563,838 to Edwards; 3,821,062 to Henderson; and 3,989,788 to Estes, Jr. et al. disclosing representative methods of producing such spunbonded sheets. Representative spunbonded thermoplastic sheets include style 9220 Gray Tricon®, available from Hickory Springs Manufacturing Company, N.C.

The fibrous web(s) containing the mixture of crimped, heat-resistant organic fibers and thermoplastic binder fibers is compressed on the spunbonded sheet. Such spunbonded sheets provide improved abrasion resistance due to the continuous surface coverage and mechanical toughness provided by the spunbonded sheet. Such continuous surface coverage, however, provides more binding points with the fibrous web, and if a binder powder or a combination of binder powder and binder fiber is used in the fibrous web a very paperlike structure results. Surprisingly, it has been found that if binder fiber is used as the sole mechanism for adhesion between the crimped fibers in the web and between the crimped fiber web and the spunbonded sheet, a more textile-like nonwoven fabric results. The resulting nonwoven fabric has more flexibility than a nonwoven fabric having binder powder and has more initial thickness while still retaining the ability to expand when exposed to high heat. In use, the spunbonded sheet side of the fabric is used as either the outer layer or the layer that will encounter the most friction in use.

The spunbonded sheet is comprised of thermoplastic filaments. "Thermoplastic" is meant to have its traditional polymer definition, that is, these materials flow in the manner of a viscous liquid when heated and solidify when cooled and do so reversibly time and time again on subsequent heatings and coolings. In some preferred embodiments of this invention, the thermoplastic is selected from the group of aliphatic polyamide, polyolefin, polyester, and copolymers thereof.

In some preferred embodiments aliphatic polyamide refers to any type of polymer containing nylon polymer or copolymer. Nylons are long chain synthetic polyamides having recurring amide groups (-NH-CO-) as an integral part of the polymer chain, and two common examples of nylons are nylon 66, which is polyhexamethylenediamine adipamide, and nylon 6, which polycaprolactam. Other nylons can include nylon 11, which is made from 11-amino-undecanoic acid; and nylon 610, which is made from the condensation product of hexamethylenediamine and sebacic acid. In some preferred embodiments the aliphatic polyamide is nylon 610, nylon 6, nylon 66 or mixtures thereof.

In some embodiments, polyolefin refers to a polypropylene or polyethylene polymer. Polypropylene is made from polymers or copolymers of propylene. Polyethylene is made from polymers or copolymers of ethylene with at least 50 mole percent ethylene on the basis of 100 mole percent polymer. Polyolefin spunbonded sheets can also include a bicomponent fiber having various polyethylene and/or polypropylene sheath-core or side-by-side constructions.

In some embodiments, polyester polymer refers to any type of synthetic polymer or copolymer composed of at least 85% by weight of an ester of dihydric alcohol and terephthalic acid. The polymer can be produced by the reaction of ethylene glycol and terephthalic acid or its derivatives. In some embodiments the preferred polyester is polyethylene terephthalate (PET). Polyester formulations may include a variety of comonomers, including diethylene glycol, cyclohexanedimethanol, poly(ethylene glycol), glutaric acid, azelaic acid, sebacic acid, isophthalic acid, and the like. In addition to these comonomers, branching agents like trimesic acid, pyromellitic acid, trimethylolpropane and trimethyloloethane, and pentaerythritol may be used. PET may be obtained by known polymerization techniques from either terephthalic acid or its lower alkyl esters (e.g. dimethyl terephthalate) and ethylene glycol or blends or mixtures of these. Useful polyesters can also include polyethylene napthalate (PEN). PEN may be obtained by known polymerization techniques from 2,6 napthalene dicarboxylic acid and ethylene glycol.

In some other embodiments the preferred polyesters are aromatic polyesters that exhibit thermotropic melt behavior. In some embodiments fully aromatic melt processible liquid crystalline polyester polymers having low melting points are preferred, such as those described in United States Patent No. 5,525,700. By a "liquid crystalline polyester" (LCP) herein is meant a polyester polymer that is anisotropic when tested using the TOT test or any reasonable variation thereof, as described in U.S. Patent 4,118,372, which is hereby included by reference. One preferred form of LCP is "all aromatic", that is all of the groups in the polymer main chain are aromatic (except for the linking groups such as ester groups), but side groups that are not aromatic may be present. LCPs useful in the spunbonded sheet have melting point up to 350°C.

It is preferred the spunbonded sheet provide adequate abrasion resistance to the fabric while not excessively increasing the flammability of the fabric. In some preferred embodiments the thermoplastic is neither naturally flame retardant or has any flame retardant additives. However, in some embodiments it can be desirable that the thermoplastic in the spunbonded sheet is fire retardant.

In some embodiments the thermoplastic polymer is deemed to be naturally flame retardant; that is, the thermoplastic polymer has a LOI of 26 or greater without the addition of any flame retardant chemicals. These types of thermoplastics can include thermoplastic material selected from the group consisting of anisotropic melt polyesters, poly(butylene terephthalate), poly(acrylonitrile butadiene styrene), polyvinylchloride, polysulfone, poly(ether-ether-ketone), poly(ether-ketone-ketone), polyethersulfone, polyarylate, polyphenylsulfone, polyetherimide, polyamide-imide, and mixtures thereof.

In some embodiments the thermoplastic polymer is made flame retardant by the addition of flame retardant chemicals. That is, a flame retardant additive is added to the thermoplastic, typically by the addition of a chemical into the polymer prior to sheet formation that makes the final polymer in the spunbonded material have a LOI of 26 or greater. To achieve this limiting oxygen index, in some embodiments, the flame retardant is added to the thermoplastic polymer in the amount of about 10 to 15 percent by weight of the thermoplastic. These types of thermoplastics can include thermoplastic material selected from the group consisting of flame retardant nylon, flame retardant polyester, flame retardant polyolefins and mixtures thereof. Representative types of FR additives include such things as 8% octa-bromo diphenyl and 4% antiomony trioxide.

Other materials, particularly those often found in or made for use in thermoplastic compositions may also be present in the thermoplastic material as long as final fabric performance is not compromised. These materials should preferably be chemically inert and reasonably thermally stable. Such materials may include, for example, one or more of fillers, reinforcing agents, pigments and nucleating agents. Other polymers may also be present, thus forming polymer blends. In some embodiments, other polymers are present it is preferred that they are less than 25 weight percent of the composition. In another preferred embodiment, other polymers are not present in the thermoplastic material except for a small total amount (less than 5 weight percent) of polymers such as those that function as lubricants and processing aids.

In some embodiments, the spunbonded sheet in the nonwoven fabric comprises 30 to 70 weight percent of the weight of the total nonwoven fabric, and in some preferred embodiments the spunbonded sheet comprises 40 to 60 weight percent of the weight of the total nonwoven fabric.

This invention also relates to a process for making an abrasion resistant nonwoven fabric that bulks in heat or flame for fire blocking an article, comprising the steps of:
a) forming a mat comprising crimped heat-resistant organic fiber and binder fiber,
b) contacting the mat with a side of a spunbonded sheet to form a fabric assembly,
c) heating the fabric assembly to activate the binder fiber,
f) compressing the fabric assembly to a compressed state, and
g) cooling the fabric assembly in a compressed state to form a abrasion resistant nonwoven fabric.

The mat may be formed by any method that can create low-density webs. For example, clumps of crimped staple fibers and binder fibers obtained from bales of fiber can be opened by a device such as a picker. Preferably these fibers are staple fibers having a linear density of about 0.55 to about 110 dtex per filament (0.5 to 100 denier per filament), preferably 0.88 to 56 dtex/filament (0.8 to 50 denier/filament) with the linear density range of about 1 to 33 dtex/filament (0.9 to 30 denier/filament) being most preferred.

The opened fiber mixture can be then blended by any available method, such as air conveying, to form a more uniform mixture. Alternatively, the fibers can be blended to form a uniform mixture prior to fiber opening in the picker. The blend of fibers can then be converted into a fibrous web by use of a device such as a card, although other methods, such as air-laying of the fibers may be used. It is preferable that the fibrous web be used directly from the card without any crosslapping. However, if desired the fibrous web can then be sent via conveyor to a device such as a crosslapper to create a crosslapped structure by layering individual webs on top of one another in a zig-zig structure.

Fibrous webs from one or more cards and a spunbonded sheet can then be collected on a transporting belt. A single web structure is overlaid onto the sheet, although a plurality of webs can be overlaid, or it is also possible to overlay the spunbonded sheet over one or more webs. Preferably the final structure has two or three carded webs on one side of the spunbonded sheet. The combined webs and spunbonded sheet are then conveyed through an oven at a temperature sufficient to soften and partially melt the binder fiber and allow it to adhere the fibers together. At the oven exit the sheet is preferably compressed between two steel rolls to consolidate the layers into a cohesive fabric and adhere the web(s) to the spunbonded sheet. The fabric is then cooled in this compressed state.

In one embodiment, the nonwoven fabric is useful in articles as fire blocking, and is especially useful to fire block the bottoms of single-sided mattresses. Such single-side mattresses require that the bottom surface in contact with the foundation have fire blocking and have an abrasion resistant surface. When used in this manner, the spunbonded sheet layer forms the outer surface of the mattress and the compressed fibrous web is not exposed to the foundation.

In some embodiments, the abrasion resistant nonwoven fabric is useful as one part of a system of fire blocking a mattress and foundation to allow an article to pass California Technical Bulletin 603 issued July 2003 and Consumer Products Safety Commission 16 CFR 1633. The abrasion resistant nonwoven fabric can be incorporated into the article, such as a mattress, in any manner that allows that mattress to past the test when it would otherwise not pass. Alternatively, in some embodiments, the abrasion resistant nonwoven fabric is useful in upholstered chairs and other items that require fire blocking.

### TEST METHODS

Thermal performance temperatures of samples were measured by a modified NFPA 1971 6.10 Thermal Protective Performance (TPP) test. Modifications include setting the sample exposure time to 90 seconds and the recording of the temperature of the calorimeter at that time.

Thermal bulking capability of samples were measured visually using scanning electronic microscopy (SEM) of the initial 2 inch x 2 inch samples and then after these same samples were exposed to 250°C air in a pre-heated oven. The samples remained in the oven for a total of 15 minutes.

Fabric stiffness of samples was measured using ASTM D4032, Standard Test Method for Stiffness of Fabric by the Circular Bend Procedure. This method measures the force required to push a 4 inch x 8 inch sample (folded in half to give a 4 inch x 4 inch test sample) through a 1.5 inch diameter orifice.

Melting points are measured per test method ASTM D3418. Melting points are taken as the maximum of the melting endotherm, and are measured on the second heat at a heating rate of 10°C/min. If more than one melting point is present the melting point of the polymer is taken as the highest of the melting points.

### EXAMPLES

### Comparative Example

A dual-layer, single-sided nonwoven material was made from a 2.0 oz/yd² spunbonded polyester sheet product available from Hickory Springs Manufacturing Company, Hickory, N.C., bonded to a fiber web consisting of 2.25 denier per filament Kevlar® staple fiber available from E. I. du Pont de Nemours Company, Richmond, VA, 3.0 denier per filament Visil® staple fiber available from Sateri Oy, Finland, 4.0 denier per filament low melt polyester staple binder fiber available from Huvis Corporation, Seoul, Korea, and Griltex® 6E binder powder available from EMS-CHEMIE (North America) Inc. was produced. The dual-layer, single-sided nonwoven material was produced by blending and carding the above staple fibers into a low basis weight batting, applying the binder powder and feeding this layer into the first of two ovens. Between the first and second oven the polyester spunbonded sheet was co-fed onto the fiber/powder web. At the end of the second oven, the material was run through a nip pressing the two layers together with pressure to create a thermally bonded sheet product. The dual-layer, single-sided nonwoven material was then tested for thickness, thermal expansion upon heating, thermal insulating performance, and fabric stiffness. The dual-layer, single-sided nonwoven material had an initial thickness of 0.73 mm and a thickness of 3.81 mm after exposure to a temperature of 250°C for 15 minutes which was an expansion of 5.2 times. The thermal performance temperature was 391°C. The fabric stiffness was 4.8 lb_{f}.

### Example 1

A dual-layer, single-sided nonwoven material was made in the same manner as the Comparative Example using the same materials; however no binder powder was used or added. This dual-layer, single-sided nonwoven material contained the same proportions of Kevlar® and Visil® staple fiber as in the Comparative Example, but had less overall binder material in the form of low melt polyester staple binder fiber.

The dual-layer, single-sided nonwoven material had and initial thickness of 3.23 mm and a thickness of 5.74 mm after exposure to a temperature of 250°C for 15 minutes, which was an expansion of 1.8 times. The thermal performance temperature was 362°C. The fabric stiffness was 3.3 lb_{f}. The increased thickness and lowered stiffness demonstrate the impact of the removal of binder powder. The result was a bulkier, more fabric-like product that displayed expansion properties when exposed to a thermal threat.

### Example 2

A dual-layer, single-sided nonwoven material was made in the same manner using the same materials as in the Comparative Example; however no binder powder was used or added. This dual-layer, single-sided nonwoven material contained the same proportions of Kevlar® and Visil® staple fiber as in the Comparative Example, and had the same overall amount of binder material as the Comparative Example, except the binder was in the form of low melt polyester staple binder fiber.

The dual-layer, single-sided nonwoven material had and initial thickness of 1.09 mm and a thickness of 4.93 mm after exposure to a temperature of 250°C for 15 minutes, which was an expansion of 4.5 times. The thermal performance temperature was 374°C. The fabric stiffness was 5.1 lb_{f}. The greater thickness of this nonwoven fabric again demonstrated the removal of binder powder created a bulkier, more fabric-like product that continues to display expansion properties when exposed to a thermal threat.

### Example 3

A dual-layer, single-sided nonwoven material was made in the same manner using the same materials as in the Comparative Example; however no binder powder was used or added. This dual-layer, single-sided nonwoven material contained less Kevlar® staple fiber and more Visil® staple fiber than in the Comparative Example and had an overall amount of binder material slightly less than in the Comparative Example. Once again the binder was in the form of low melt polyester staple binder fiber.

The dual-layer, single-sided nonwoven material had and initial thickness of 1.22 mm and a thickness of 3.95 mm after exposure to a temperature of 250°C for 15 minutes, which was an expansion of 3.2 times. The thermal performance temperature was 393°C. The fabric stiffness was 4.4 lb_{f}. The greater thickness of this nonwoven fabric again demonstrated the removal of binder powder created a bulkier, more fabric-like product that continues to display expansion properties when exposed to a thermal threat.

**Table 1**

| **Example** | **A** | **1** | **2** | **3** |
|---|---|---|---|---|
| **Kevlar, osy** | 0.9 | 0.9 | 0.9 | 0.5 |
| **Visil, osy** | 0.9 | 0.9 | 0.9 | 1.0 |
| **PET Binder Powder, osy** | 0.3 | 0.0 | 0.0 | 0.0 |
| **PET Binder Fiber, osy** | 0.4 | 0.3 | 0.7 | 0.6 |
| **Total Fiber Basis Weight, osy** | 2.5 | 2.1 | 2.5 | 2.1 |
| **Polyester Spunbond Basis Weight, osy** | 2.0 | 2.0 | 2.0 | 2.0 |
| **Total Barrier Basis Weight** | 4.5 | 4.1 | 4.5 | 4.1 |
| **Polyester Spunbond Thickness, mm** | 0.31 | 0.31 | 0.31 | 0.31 |
| **Thermal Performance Temp Sample Basis** | | | | |
| **Weight (osy)** | **4.7** | **4.2** | **4.3** | **4.3** |
| **Thermal Performance Temperature, (°C)** | | | | |
| **Average** | **391** | **362** | **374** | **393** |
| Std Dev | 10 | 6 | 13 | 9 |
| Count | 7 | 7 | 7 | 7 |
| 95% Cl | 9 | 6 | 12 | 9 |
| **Average Fabric Stiffness (lb_{f})** | | | | |
| **Average** | **4.8** | **3.3** | **5.1** | **4.4** |
| Std Dev | 0.5 | 0.6 | 0.5 | 0.5 |
| Count | 5.0 | 5.0 | 5.0 | 5.0 |
| 95% Cl | 0.6 | 0.7 | 0.6 | 0.6 |

**Table 2**

| **Example** | **A** | **1** | **2** | **3** |
|---|---|---|---|---|
| **Heat Exposure Temperature, °C** | **Thickness, mm** | | | |
| Control | 0.73 | 3.23 | 1.09 | 1.22 |
| 150 | 1.23 | 4.84 | 3.49 | 3.51 |
| 200 | 2.51 | 4.24 | 3.92 | 4.32 |
| 230 | 3.10 | 5.15 | 4.11 | 4.86 |
| 250 | 3.81 | 5.74 | 4.93 | 3.95 |

## Claims

1. An abrasion resistant nonwoven fabric for fire blocking an article, comprising:
a layer of fibers comprising a mixture of crimped, heat-resistant organic fibers and thermoplastic binder fibers compressed on a spunbonded thermoplastic nonwoven sheet,
the layer of fibers being held in a compressed state; and to the sheet, solely by the adhesion of the thermoplastic binder fibers to the heat-resistant organic fibers and to the sheet; and
wherein when the fabric is exposed to heat or flame, the fabric increases in thickness by at least one and one half times.

2. The abrasion resistant nonwoven fabric of claim 1 wherein the fabric increases in thickness by at least two times when the fabric is exposed to heat or flame.

3. The abrasion resistant nonwoven fabric of claim 1 wherein the fabric increases in thickness by at least three times when the fabric is exposed to heat or flame.

4. The abrasion resistant nonwoven fabric of claim 1, wherein the heat-resistant organic fiber is a para-aramid fiber

5. The abrasion resistant nonwoven fabric of claim 1, wherein the spunbonded sheet comprises 30 to 70 weight percent of the weight of the total abrasion resistant nonwoven fabric.

6. The abrasion resistant nonwoven fabric of claim 5, wherein the spunbonded sheet comprises 40 to 60 weight percent of the weight of the total abrasion resistant nonwoven fabric.

7. The abrasion resistant nonwoven fabric of claim 1, wherein the layer of fibers comprises crimped heat-resistant organic fibers in an amount of about 20 to 50 percent by weight and thermoplastic binder fibers in an amount of about 10 to 30 percent by weight, based on the total weight of the layer of fibers.

8. The abrasion resistant nonwoven fabric of claim 7, wherein the layer of fibers comprises crimped heat-resistant organic fibers in an amount of 20 to 40 percent by weight and thermoplastic binder fibers in an amount of 20 to 30 percent by weight, with the remaining fibers being char forming fibers.

9. A process for making an abrasion resistant nonwoven fabric that bulks in heat or flame for fire blocking an article, comprising the steps of:
a) forming a mat comprising crimped heat-resistant organic fiber and binder fiber,
b) contacting the mat with a side of a spunbonded sheet to form a fabric assembly,
c) heating the fabric assembly to activate the binder fiber,
f) compressing the fabric assembly to a compressed state, and
g) cooling the fabric assembly in a compressed state to form a abrasion resistant nonwoven fabric.

10. The process for making an abrasion resistant nonwoven fabric of claim 9, wherein the mat comprises crimped heat-resistant organic fibers in an amount of about 20 to 50 percent by weight and thermoplastic binder fibers in an amount of about 10 to 30 percent by weight, based on the total weight of the mat.

## Patentansprüche

1. Abriebfester Vliesstoff für das Feuerblockieren eines Artikels, umfassend:
eine Schicht von Fasern umfassend eine Mischung von gekräuselten, hitzefesten organischen Fasen und thermoplastischen Bindefasern, die auf einer thermoplastischen Spinnvliesfolie komprimiert sind,
wobei die Schicht von Fasern in einem komprimierten Zustand und, ausschließlich durch Haftung der thermoplastischen Bindefasern an den hitzefesten organischen Fasern und an der Folie, an der Folie gehalten werden; und
wobei, wenn der Stoff Hitze oder einer Flamme gegenüber ausgesetzt wird, er in der Dicke um mindestens das Eineinhalbfache zunimmt.

2. Abriebfester Vliesstoff nach Anspruch 1, wobei der Stoff in der Dicke um mindestens das Zweifache zunimmt, wenn er Hitze oder einer Flamme gegenüber ausgesetzt wird.

3. Abriebfester Vliesstoff nach Anspruch 1, wobei der Stoff in der Dicke um mindestens das Dreifache zunimmt, wenn er Hitze oder einer Flamme gegenüber ausgesetzt wird.

4. Abriebfester Vliesstoff nach Anspruch 1, wobei die hitzefeste organische Faser eine Para-Aramidfaser ist.

5. Abriebfester Vliesstoff nach Anspruch 1, wobei die Spinnvliesfolie 30 bis 70 Gewichtsprozent, auf das Gewicht des gesamten abriebfesten Vliesstoffs bezogen, umfasst.

6. Abriebfester Vliesstoff nach Anspruch 5, wobei die Spinnvliesfolie 40 bis 60 Gewichtsprozent, auf das Gewicht des gesamten abriebfesten Vliesstoffs bezogen, umfasst.

7. Abriebfester Vliesstoff nach Anspruch 1, wobei die Schicht von Fasern gekräuselte, hitzefeste organische Fasern in einer Menge von etwa 20 bis 50 Gewichtsprozent und thermoplastische Bindefasern in einer Menge von etwa 10 bis 30 Gewichtsprozent, auf das Gesamtgewicht der Schicht von Fasern bezogen, umfasst.

8. Abriebfester Vliesstoff nach Anspruch 7, wobei die Schicht von Fasern gekräuselte, hitzefeste organische Fasern in einer Menge von 20 bis 40 Gewichtsprozent und thermoplastische Bindefasern in einer Menge von 20 bis 30 Gewichtsprozent umfasst, wobei die restlichen Fasern Holzkohle bildende Fasern sind.

9. Verfahren für die Herstellung eines abriebfesten Vliesstoffs, der sich in der Hitze oder einer Flamme zum Feuerblockieren eines Artikels aufbauscht, umfassend die Schritte des:
a) Bildens einer Matte umfassend gekräuselte, hitzefeste organische Faser und Bindefaser,
b) Kontaktierens der Matte mit einer Seite einer Spinnvliesfolie unter Bildung eines Stoffzusammenbaus,
c) Erhitzens des Stoffzusammenbaus, um die Bindefaser zu aktivieren,
f) Komprimierens des Stoffzusammenbaus in einen komprimierten Zustand und
g) Kühlens des Stoffzusammenbaus in einem komprimierten Zustand unter Bildung eines abriebfesten Vliesstoffs.

10. Verfahren für die Herstellung eines abriebfesten Vliesstoffs nach Anspruch 9, wobei die Matte gekräuselte, hitzefeste organische Fasern in einer Menge von etwa 20 bis 50 Gewichtsprozent und thermoplastische Bindefasern in einer Menge von etwa 10 bis 30 Gewichtsprozent, auf das Gesamtgewicht der Matte bezogen, umfasst.

## Revendications

1. Etoffe non tissée résistante à l'abrasion pour bloquer un article du feu, comprenant:
une couche de fibres comprenant un mélange de fibres organiques résistantes à la chaleur frisées et fibres liantes thermoplastiques compressées sur une feuille non tissée thermoplastique filée-liée,
la couche de fibres étant maintenue dans un état compressé, et à la feuille, uniquement par l'adhésion des fibres liantes thermoplastiques aux fibres organiques résistantes à la chaleur et à la feuille; et
dans laquelle, lorsque l'étoffe est exposée à de la chaleur ou une flamme, l'étoffe augmente d'épaisseur d'au moins une fois et demie.

2. Etoffe non tissée résistante à l'abrasion selon la revendication 1, dans laquelle l'étoffe augmente d'épaisseur d'au moins deux fois lorsque l'étoffe est exposée à de la chaleur ou une flamme.

3. Etoffe non tissée résistante à l'abrasion selon la revendication 1, dans laquelle l'étoffe augmente d'épaisseur d'au moins trois fois lorsque l'étoffe est exposée à de la chaleur ou une flamme.

4. Etoffe non tissée résistante à l'abrasion selon la revendication 1, dans laquelle la fibre organique résistante à la chaleur est une fibre de para-aramide.

5. Etoffe non tissée résistante à l'abrasion selon la revendication 1, dans laquelle la feuille filée-liée représente 30 à 70 pour cent en poids du poids de l'étoffe non tissée résistante à l'abrasion totale.

6. Etoffe non tissée résistante à l'abrasion selon la revendication 5, dans laquelle la feuille filée-liée représente 40 à 60 pour cent en poids du poids de l'étoffe non tissée résistante à l'abrasion totale.

7. Etoffe non tissée résistante à l'abrasion selon la revendication 1, dans laquelle la couche de fibres comprend des fibres organiques résistantes à la chaleur frisées en une quantité d'environ 20 à 50 pour cent en poids et des fibres liantes thermoplastiques en une quantité d'environ 10 à 30 pour cent en poids, par rapport au poids total de la couche de fibres.

8. Etoffe non tissée résistante à l'abrasion selon la revendication 7, dans laquelle la couche de fibres comprend des fibres organiques résistantes à la chaleur frisées en une quantité d'environ 20 à 40 pour cent en poids et des fibres liantes thermoplastiques en une quantité d'environ 20 à 30 pour cent en poids, les fibres restantes étant des fibres formant un produit de carbonisation.

9. Procédé pour fabriquer une étoffe non tissée résistante à l'abrasion qui gonfle à la chaleur ou dans une flamme pour bloquer un article du feu, comprenant les étapes consistant:
a) à former un mat comprenant une fibre organique résistante à la chaleur frisée et une fibre liante,
b) à mettre en contact le mat avec un côté d'une feuille filée-liée pour former un ensemble d'étoffe,
c) à chauffer l'ensemble d'étoffe pour activer la fibre liante,
f) à compresser l'ensemble d'étoffe en un état compressé, et
g) à refroidir l'ensemble d'étoffe dans un état compressé pour former une étoffe non tissée résistante à l'abrasion.

10. Procédé pour fabriquer une étoffe non tissée résistante à l'abrasion selon la revendication 9, dans lequel le mat comprend des fibres organiques résistantes à la chaleur frisées en une quantité d'environ 20 à 50 pour cent en poids et des fibres liantes thermoplastiques en une quantité d'environ 10 à 30 pour cent en poids, par rapport au poids total du mat.
